(19) Europäisches Patentamt
European Patent Office
Office européen des brevets

(11) **EP 3 057 171 A1**

(12) **EUROPEAN PATENT APPLICATION**

(43) Date of publication:
**17.08.2016 Bulletin 2016/33**

(51) Int Cl.:
*H01M 10/42* (2006.01)     *H02H 9/00* (2006.01)
*H01M 10/052* (2010.01)

(21) Application number: **16155186.6**

(22) Date of filing: **11.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.02.2015 GB 201502321**

(71) Applicant: **Exis Energy Limited**
**East Knapton, Yorkshire YO17 8JA (GB)**

(72) Inventor: **Holliday, Antony**
**East Knapton, Yorkshire YO17 8JA (GB)**

(74) Representative: **HGF Limited**
**1 City Walk**
**Leeds LS11 9DX (GB)**

(54) **BATTERY FOR HANDHELD DEVICE**

(57)     A battery for a handheld device. The battery comprising a battery cell having a voltage of from 0.5 to 5volts, a fuse having a current rating of from 0.05 to 0.75amperes, and a resistor having a resistance of from 1 to 1200ohms.

Figure 1.

## Description

The present invention relates to a battery for a handheld device.

Some electrical devices are required to be used in hazardous and/or explosive atmospheres. Special consideration must be given to the arrangement of the component parts of such electrical devices so that they are intrinsically safe. The hazardous and/or explosive atmospheres may be flammable and/or dust mixes and may be onshore, offshore or underground.

Intrinsically safe equipment is intended to mitigate the potential for both spark and thermal ignition of a hazardous and/or explosive atmosphere.

Batteries for handheld devices have traditionally only been changeable within safe areas and not in a hazardous and/or explosive atmosphere. There is the potential for a spark ignition to be created when a battery is removed or inserted into the handheld device or tool or a spark to be created when the battery is being transported. This means a user must return to a safe area to change the battery. This could mean a walk of a kilometre or more.

Intrinsically safe batteries for handheld devices have traditionally only been chargeable using custom made devices that ensure the components in the battery that ensure its intrinsic safety are not damaged such that the intrinsic safety of the battery is compromised.

In accordance with a first aspect of the present invention there is provided a battery for a handheld device, the battery comprising:

> a battery cell having a voltage of from 0.5 to 5volts;
> a fuse having a current rating of from 0.05 to 0.75amperes; and
> a resistor having a resistance of from 1 to 1200ohms.

The battery typically further comprises one or more electrical contacts operably connected to the battery cell, fuse and resistor. The fuse and resistor are typically between the battery cell and one or more electrical contacts. The voltage operably supplied to the one or more electrical contacts is preferably from 0.5 to 10volts. A voltage of less than 10volts passing through the fuse and/or resistor may render the power nonincendiary, that is not incendiary and therefore not capable of causing a fire.

The power operably supplied to the one or more electrical contacts is preferably from 0.1 to 5watts. A power of less than 5watts may render the power nonincendiary, that is not incendiary and therefore not capable of causing a fire. The power operably supplied to the one or more electrical contacts may be from 0.5 to 3watts. The power operably supplied to the one or more electrical contacts is normally from 1 to 1.5watts and typically 1.3watts.

In use, the power suppliable to the one or more electrical contacts passes through the fuse and the resistor.

When the voltage and/or power is nonincendiary, the voltage and/or power are typically less than that required to create a spark ignition or a thermal ignition. The nonincendiary voltage and/or power may be spark resistive and/or power limiting. The nonincendiary voltage and/or power may match or be better than the thermal or thermal ignition requirements within a hazardous and/or explosive atmosphere. The nonincendiary voltage and/or power may be referred to as power limiting.

It is typically the combination of battery cell, fuse and resistor that renders the power and/or voltage operably supplied to the one or more electrical contacts nonincendiary. It may be an advantage of the present invention that the spark resistive and/or limiting or nonincendiary voltage and/or power allows the removal from, fitting with and/or replacement of the battery for a handheld device in a hazardous area.

The battery cell, fuse, resistor and one or more electrical contacts may be operably connected by a first electrical circuit. The battery cell is typically a source of electrical energy. There may be more than one battery cell, typically two battery cells.

One or more of the battery cell, fuse, resistor and one or more electrical contacts may be operably connected in series.

One or more of the battery cell, fuse, resistor and first electrical circuit are typically in a housing. The one or more electrical contacts may be mounted to an outside surface of the housing. The one or more electrical contacts may be referred to as one or more power outputs or one or more power pins. The one or more electrical contacts are typically engageable with one or more corresponding contacts of a handheld device to power the handheld device.

When not connected to a handheld device, the one or more electrical contacts may be one or more of protectable, isolatable and sealable from the surrounding environment with a cover. The cover may be IP54 rated. When the IP54 rated cover is closed and/or sealed against an outer surface of the housing, the cover typically reduces and may prevent the one or more electrical contacts coming into contact with a hazardous environment. It may be an advantage of the present invention that the battery and in particular the battery cell may be safely transported in a hazardous environment when not in use and/or when, in particular, not connected and/or attached to a handheld device.

Each of the one or more electrical contacts typically operably supply a power of equal to or less than 1.3watts. When there is more than one electrical contact the combined power is however more than 1.3watts and the cover is therefore used to one or more of protect, isolate and seal the one or more electrical contacts from the surrounding environment when the battery is not in use.

It may be an advantage of the present invention that the battery is hot-swappable, that is the battery can be separated and/or attached to a suitable handheld device in a hazardous and/or explosive atmosphere. The voltage and/or power supplied to the one or more electrical contacts may be referred to as limited and/or protected such that the battery is hot-swappable.

The fuse typically has a current rating of 0.05 to 0.50amperes and normally 0.25amperes. The current rating of the fuse is the maximum current that is continuously passable through the fuse without electrical contact across the fuse being interrupted. The fuse may be a PICO 305-Series fuse supplied by Littelfuse(TM).

The fuse is typically encapsulated. An encapsulated fuse and/or the fuses internal components are normally sealed and may be hermetically sealed from a surrounding environment. Material used to encapsulate the fuse may be referred to as an encapsulant. The encapsulant may comprise sand, silicone or a silicone elastomer. The encapsulant may be a 744 RTV Sealant supplied by Dow Corning(TM).

The fuse and/or the encapsulant may be approved under the UL 913 standard for Intrinsically Safe Electrical Equipment. The fuse may be a PICO 305-Series 277C UL913 fuse supplied by Littelfuse(TM).

The battery cell typically has a voltage of from 2 to 5volts. The battery cell normally has a voltage of from 3 to 4.5volts. The voltage may be referred to as the nominal voltage. The battery is normally a lithium battery. The battery may be a rechargeable or non-rechargeable battery.

The resistor typically has a resistance of from 0 to 15ohms. The resistor is typically mains pulse capable, through the fuse, such that the resistor remains operable within its defined parameters. A mains pulse is defined by the opening time of the fuse with the resistor. The resistor is tolerant to the resultant mains power such that the power is dissipated in the resistor for the opening time. A factor of safety of 1.5 is applied to the power rating of the resistor, such that:

$$\text{Resistor pulse power / mains pulse} = >1.5$$

The fuse resistance may or may not be included in the resistor evaluation. The factor of safety of 1.5 is defined in the IEC 60079-11 standard.

There may be more than one resistor. The resistor may be a thick film chip resistor and/or a thick film chip resistor as specified in IEC 60079-11. The resistor may have a pulse capacity of up to 4000watts for a 0.0001 second pulse duration. The resistor may be a RPC series, 2512 wide body, 1.5W 5% resistor supplied by Stackpole Electronics(TM).

The resistor is typically encapsulated. An encapsulated resistor and/or its internal components are normally sealed and may be hermetically sealed from a surrounding environment. Material used to encapsulate the resistor may be referred to as an encapsulant. The encapsulant may comprise sand, silicone or a silicone elastomer. The encapsulant may be a 744 RTV Sealant supplied by Dow Corning(TM).

The first electrical circuit may comprise one or more power rails. The first electrical circuit typically comprises five power rails. Typically the fuse and the resistor of the battery are mounted on and/or are in electrical communication and/or are operably connected to the one or more power rails. Typically, at least one fuse and at least one resistor are operably connected to each power rail. This typically means that in use, power passing from one end to another end of the power rail must pass through the fuse and the resistor.

The battery may comprise two battery cells and five power rails. Each power rail may be operable to carry a power of equal to or less than 1.3watts. Each power rail may be operable to carry the same or a different power. Typically two of the power rails are operable to carry a first power and three of the power rails are operable to carry a second power.

The handheld device may be portable. The handheld device may be one or more of a power tool, torch, digital camera, infrared camera, testing device, measurement device, distance meter and a thickness gauge.

The battery is typically intrinsically safe. The handheld device is typically intrinsically safe. The battery and/or handheld device may be certified as intrinsically safe as defined in the IEC 60079-11 standard.

Any component of the first electrical circuit including one or more of the battery cell, fuse, resistor and one or more electrical contacts that have a surface area of equal to or less 20mm$^2$ is typically encapsulated with an encapsulant.

The encapsulant may comprise sand, silicone or a silicone elastomer. The encapsulant may be a local non-flowing potting compound. The encapsulant may be a 744 RTV Sealant supplied by Dow Corning(TM). The encapsulant typically increases the surface area of any component to greater than 20mm$^2$. All components typically have a surface area of greater than 20mm$^2$. All components are therefore considered to satisfy the IEC 60079-11 standard. All components may belong to the T4 class of components in the IEC 60079-11 standard and thereby have a maximum permitted power of 1.3watts at +40°C.

The first electrical circuit may comprise one or more power rails between and/or connected to the battery cell and the fuse and/or resistor. The one or more power rails may be separated from the surrounding environment by infallible tracking. The infallible tracking may be a physical barrier made of a non-electrically conductive or insulative material. The barrier may have a thickness or cross-sectional diameter of equal to or greater than 2mm. The infallible tracking may mitigate the risk of any fault along one or more of the power rails affecting another part of the first electrical circuit.

The battery may further comprise an input. The input may be protected. The input is typically in electrical communication and/or operably connected to the battery cell. The battery cell and input may be operably connected by a second electrical circuit. It may be an advantage of the present invention that, in use, power can be supplied to the battery cell without the power passing through the fuse and/or the resistor and therefore without protection.

A charger may be used to supply the input with suitable power to charge and/or recharge the battery cell. The charger is typically standard. It may be an advantage of the present invention that the battery, and in particular the battery cell, may be charged and/or recharged using a standard charger.

The input may be mounted to an outside surface of the housing. The input may be sealable in the housing behind an IP54 rated door. The IP54 rated cover is typically separate from the IP54 rated door. This normally allows the one or more electrical contacts to be exposed separately from the input.

When the IP54 rated door is closed and/or sealed against the outer surface of the housing, the door typically reduces and may prevent the input coming into contact with a hazardous environment.

The second electrical circuit is typically operably connected to first electrical circuit. The fuse and/or resistor operably connected by first electrical circuit are typically mains fault tolerant.

In use, the charger is typically only connected to the input when the battery and charger are in a safe area, that is not in a hazardous and/or explosive atmosphere. The charger is typically only connected to the battery when the battery is separated and/or disconnected from the handheld device.

The mains tolerance of the fuse is typically provided by the fuse having a breaking capacity of at least 1500amperes at 277volts AC or DC. The breaking capacity may be referred to as the interrupting capacity. The breaking capacity is the maximum current that is continuously passable through the fuse without electrical communication across the fuse being interrupted. The breaking time of the fuse may be equal to or less than 0.0001 seconds at equal to or greater than 10amperes. The fuse may be a PICO 305-Series 277C UL913 fuse supplied by Littelfuse(TM).

The mains tolerance of the resistor is typically provided by the resistor having mains power pulse capacity of up to 4000watts for a 0.0001 second pulse duration. The resistor may be a RPC series, 2512 wide body, 1.5W 5% resistor supplied by Stackpole Electronics(TM).

It is understood that a fault in one or more of the charger, second circuit or battery cell may result in a direct short to 0volts. This may mean a supply of 250volts to the input and therefore could also mean a supply of 250volts to the one or more electrical contacts. The fuse may have an electrical resistance of equal to or more than 1.3ohms. The resistor may have an electrical resistance of equal to or greater than 9ohms, typically 9.9ohms ± 5%. There may be more than one resistor, typically three resistors.

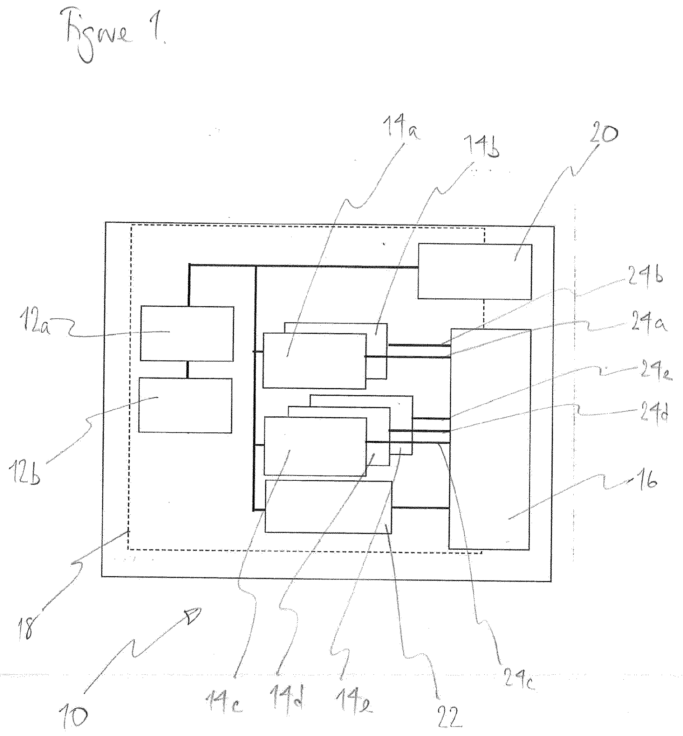

An embodiment of the invention will now be described by way of example only and with reference to Figure 1 which is a diagrammatic view of the battery according to an aspect of the present invention.

Figure 1 shows a battery 10 comprising battery cells 12a&b and power limiters 14a-e. The power limiters 14a-e each comprise a fuse and a resistor (not shown separately). The battery 10 has two battery cells 12a&b. Each battery cell 12a&b has a nominal voltage of 3.8volts and a maximum voltage of 4.8volts. Battery cells 12a&b are connected in series.

The fuse in each power limiter 14a-e has a current rating of 0.25amperes. The resistor in each power limiter 14a-e has a resistance of between 10ohms and 13ohms. Resistors 14a&b have a resistance of 12.2ohms, resistors 14c-e have a resistance of 10.4ohms. The fuse is a PICO 305-Series 277C UL913 fuse supplied by Littelfuse(TM). The resistor is a RPC series, 2512 wide body, 1.5W 5% resistor supplied by Stackpole Electronics(TM).

The battery 10 also has a connector 16 including five electrical contacts (not shown separately). The battery cells 12a&b and power limiters 14a-e are contained in a housing 18. The connector 16 is mounted to an outside surface of the housing 18. The battery 10 also has an input 20 mounted to an outside surface of the housing 18.

Battery cells 12a&b each have a nominal voltage of 3.8volts. Battery cells 12a&b each have a maximum voltage of 4.2volts. The five electrical contacts (not shown) of the connector 16 are each connected to both battery cells 12a&b via the five power limiters 14a-e. The nominal voltage supplied to each of the five electrical contacts (not shown) of the connector 16 is therefore 7.3volts and the maximum voltage is 8.4volts. The power supplied to each of the five electrical contacts (not shown) is less than 1.3watts. The maximum current supplied to each of the five electrical contacts (not shown) of the connector 16 is 0.25amperes.

The voltage and power supplied to and by the five electrical contacts (not shown) of the connector 16 are nonincendiary, and therefore less than that required to create a spark ignition.

In use, the power or electrical energy is supplied to the five electrical contacts (not shown) of the connector 16 from the battery cells 12a&b via the power limiters 14a-e. Battery cell 12b is directly connected to the input 20 and the five power limiters 14a-e.

The five power limiters 14a-e are arranged in two sets. The first set has two power limiters 14a&b; the second set has three power limiters 14c-e. Power limiter 14a is attached to power rail 24a; power limiter 14b is attached to power rail 24b; power limiter 14c is attached to power rail 24c; power limiter 14d is attached to power rail 24d; and power limiter 14e is attached to power rail 24e.

A battery monitor 22 is connected to the battery cell 12b and the connector 16. The battery monitor 22 has a display and a user activated switch. The display has three Light Emitting Diodes (LED's).

The battery cells 12a&b, fuse and resistors of the power limiters 14a-e and five electrical contacts (not shown) of the connector 16 are components of a first electrical circuit. The battery cells 12a&b and input 20 are components of a second electrical circuit.

The first and second electrical circuits are connected but in use power can be supplied from the input 20 to the battery cells 12a&b without the power passing through the fuses or the resistors of the power limiters 14a-e. The fuses and resistors of the power limiters 14a-e are however mains fault tolerant. The fuse typically has a breaking capacity of 1500amperes at 277volts AC or DC. The resistor has a pulse capacity of 4000watts for a 0.0001 second pulse duration.

When in a hazardous and/or explosive atmosphere the input 20 is sealed in the housing behind an IP54 rated door. When the battery 10 is in safe area and not in a hazardous and/or explosive atmosphere, the IP54 rated door is removed from the housing to expose the input 20 and a charger (not shown) used to supply the input 20 with suitable power to charge and recharge the battery cells 12a&b.

It will be understood that when the term connected is used to refer to two or more components of the battery, this connection is an electrical connection and may be tracking, wire, cable or any other form of electrical connection.

When not connected to a handheld device, the five electrical contacts (not shown) of the connector 16 are sealed from the surrounding environment with a IP54 rated cover.

The voltage and power supplied by the battery cells 12a&b to the five electrical contacts (not shown) of the connector 16, through the power limiters 14a-e of the first electrical circuit, are protected such that the battery 10 is hot-swappable. The battery 10 can therefore be separated and attached to a suitable handheld device in a hazardous and/or explosive atmosphere. The battery is intrinsically safe, as defined in the IEC 60079-11 standard.

Modifications and improvements can be incorporated herein without departing from the scope of the invention.

**Claims**

1. A battery for a handheld device, the battery comprising:

   a battery cell having a voltage of from 0.5 to 5volts;
   a fuse having a current rating of from 0.05 to 0.75amperes; and
   a resistor having a resistance of from 1 to 1200ohms.

2. A battery according to claim 1 further comprising an input, the input in electrical communication with the battery cell such that power is suppliable from the input to the battery cell separately from the fuse and resistor.

3. A battery according to claim 1 or claim 2 wherein the battery further comprises one or more electrical contacts operably connected to the battery cell, fuse and resistor and wherein the fuse and resistor are between the battery cell and one or more electrical contacts.

4. A battery according to claim 3 wherein the voltage operably supplied to the one or more electrical contacts is preferably from 0.5 to 10volts.

5. A battery according to claim 3 or claim 4 wherein the power operably supplied to the one or more electrical contacts is from 1 to 1.5watts.

6. A battery according to any of claims 3 to 5 wherein the one or more electrical contacts are protectable with a cover, the cover being IP54 rated.

7. A battery according to claim 6 wherein the input is mounted to an outside surface of the housing, the input being sealable in the housing behind an IP54 rated door.

8. A battery according to any preceding claim wherein the fuse has a current rating of 0.25amperes.

9. A battery according to any preceding claim wherein the fuse has a breaking capacity of at least 1500amperes at 277volts AC or DC.

10. A battery according to any preceding claim wherein the battery cell has a voltage of from 3 to 4.5volts.

11. A battery according to any preceding claim wherein the resistor has a resistance of from 0 to 15ohms.

12. A battery according to any preceding claim wherein the resistor has a pulse capacity of up to 4000watts for a 0.0001 second pulse duration.

13. A battery according to any preceding claim wherein the fuse and resistor are mounted on a power rail.

14. A battery according to claim 13 wherein the battery comprises five power rails, each power rail having a fuse and a resistor mounted thereon, two power rails operable to carry a first power and three power rails operable to carry a second power.

15. A battery according to any preceding claim wherein the battery is intrinsically safe.

Figure 1.

Europäisches
Patentamt

European
Patent Office

Office européen
des brevets

# EUROPEAN SEARCH REPORT

Application Number

EP 16 15 5186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 140 231 A (WEATHERFORD LAMB) 21 November 1984 (1984-11-21) * page 1, line 85 - page 2, line 8 * * page 1, line 9 - line 26; figure 1 * ----- | 1-15 | INV. H01M10/42 H02H9/00 H01M10/052 |
| X | WO 99/56258 A1 (US HEALTH [US]; MAYERCHECK WILLIAM D [US]; BRAUTIGAM ALBERT L [US]) 4 November 1999 (1999-11-04) * page 9, line 5 - line 23 * * figures 1,4,5 * ----- | 1,3,4 | |

TECHNICAL FIELDS
SEARCHED     (IPC)

H01M
H02H

The present search report has been drawn up for all claims

| Place of search | Date of completion of the search | Examiner |
|---|---|---|
| Munich | 3 June 2016 | Horváth, László |

EPO FORM 1503 03.82 (P04C01)

**ANNEX TO THE EUROPEAN SEARCH REPORT
ON EUROPEAN PATENT APPLICATION NO.**

EP 16 15 5186

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2016

| Patent document cited in search report | | Publication date | Patent family member(s) | | Publication date |
|---|---|---|---|---|---|
| GB 2140231 | A | 21-11-1984 | NONE | | |
| WO 9956258 | A1 | 04-11-1999 | AU | 747632 B2 | 16-05-2002 |
| | | | AU | 3654699 A | 16-11-1999 |
| | | | CA | 2329313 A1 | 04-11-1999 |
| | | | GB | 2355098 A | 11-04-2001 |
| | | | WO | 9956258 A1 | 04-11-1999 |

EPO FORM P0459

For more details about this annex : see Official Journal of the European Patent Office, No. 12/82